# EUROPEAN PATENT APPLICATION

(11) **EP 4 465 037 A1**
(43) Date of publication of application: **20.11.2024**
(21) Application number: 22922332.6
(22) Date of filing: 27.10.2022
(51) Int. Cl.: G01N 27/62, G01N 27/20

(54) **DAMAGE DETECTION DEVICE AND DAMAGE DETECTION METHOD**

(30) Priority: 19.01.2022 KR 20220007664
(71) Applicant: LG Electronics Inc., Yeongdeungpo-gu Seoul 07336 (KR)
(72) Inventor: HONG, Yoonki, Seoul 06772 (KR); LIM, Daecheol, Seoul 06772 (KR); CHANG, Yoonmin, Seoul 06772 (KR)
(74) Representative: Frenkel, Matthias Alexander
(86) International application number: PCT/KR2022/016565
(87) International publication number: WO 2023/140473

(57) **Abstract**

Provided, according to the embodiments, is a damage detection device comprising: an application module for applying an ionized gas to an insulating layer; an electrical signal acquisition unit for acquiring an electrical signal of the insulating layer when the ionized gas is applied to the insulating layer; and a processor for, on the basis of the acquired electrical signal, determining whether damage to the insulating layer has been detected.

## Description

### TECHNICAL FIELD

Embodiments relate to an apparatus for detecting damage and method thereof. For example, embodiments are applied to an apparatus and method for detecting damage to an insulating layer.

### BACKGROUND ART

Recently, secondary batteries have emerged to achieve energy saving and environmental protection owing to the increasing interest in the environment.

A secondary battery refers to a battery that is suable semi-permanently by charging electricity generated in a process of causing an oxidation-reduction reaction of a material between an anode and a cathode. Unlike a primary battery of the related art that is only one-time usable, the secondary battery is advantageous in that it is rechargeable multiple times to be reused.

The secondary battery includes a cathode, an anode, a separator, and an electrolyte for charging a battery. Such battery charging elements are hereinafter referred to as an electrode assembly. In order to protect the electrode assembly, the secondary battery further includes an insulating external material that surrounds an outer surface of the electrode assembly. For example, the secondary battery includes a pouch that surrounds the electrode assembly.

The pouch includes an outer layer, a conductor layer, and an inner layer. In this case, a portion of the pouch may be damaged in the process of manufacturing the pouch or the process of assembling the pouch with the electrode assembly. For example, the pouch may expose the conductor layer by damage to the outer layer or the inner layer. In this case, safety problems may occur through a reaction with the inside and outside of the battery. Therefore, it is necessary to determine whether the pouch is damaged. To this end, the following methods are proposed.

First, damage to a pouch may be determined through vision. A damage detecting device using a vision acquires an image by photographing the appearance of the pouch through a vision camera. In this case, the damage to the pouch is determined with naked eyes through the acquired image. However, as the inspection is performed by the naked eyes, there is a problem in that accuracy is degraded.

As another method, there is a method of determining damage to a pouch by applying a high voltage. A damage detecting device for applying a high voltage detects a portion where the insulation of the pouch is destroyed by applying the high voltage to the pouch. However, in this case, there is a problem in that additional damage or the like occurs on a surface of the pouch due to the high voltage.

As another method, there is a method of determining damage to a pouch through a displacement sensor. A damage detecting device using a displacement sensor measures a height of a pouch with a displacement sensor positioned in a vertical or horizontal direction to determine damage to the pouch. However, even in this case, there is a problem in that accuracy is degraded as the inspection by naked eyes is accompanied.

### DISCLOSURE

### TECHNICAL TASKS

One technical task of the present disclosure is to provide an apparatus and method for detecting damage.

Embodiments provide a method of determining whether there is damage to an object.

Embodiments provide an apparatus and method for detecting damage for differently outputting an electrical signal between a damaged region and a normal region.

Embodiments provide an apparatus and method for detecting damage for determining whether there is damage to an insulating layer without damaging the insulating layer.

Embodiments provide an apparatus and method for identifying a location of damage occurring in an insulating layer.

Embodiments provide an apparatus and method for detecting damage for determining whether a conductor or an insulator is exposed by damage to an insulating layer.

The technical tasks to be achieved in embodiments are not limited to the above-mentioned matters, and other technical tasks unmentioned may be considered by those skilled in the art from various embodiments to be described below.

### TECHNICAL SOLUTIONS

According to embodiments, provided is an apparatus for detecting damage, the apparatus including an application module applying a prescribed material to an object and an electrical signal acquisition unit acquiring an electrical signal of the object based on applying the prescribed material to the object.

The electrical signal acquisition unit may include a filter circuit filtering the electrical signal of the object and a measurement circuit measuring the filtered electrical signal.

The apparatus may include a processor configured to determine whether the object is damaged based on the acquired electrical signal.

The prescribed material may include an ionized gas or an activated material.

The apparatus may include a distance measurement sensor measuring a distance between the application module and the object and a stage providing a space for having the object loaded therein.

The processor may be configured to acquire an electrical signal for a normal region of the object and determine a region in which an electrical signal different from the electrical signal for the normal region is acquired as a damaged region of the object.

The stage may move with respect to the application module to maintain a constant distance between the application module and the object based on the measured distance.

The object may include a conductor and an insulator surrounding at least a portion of the conductor.

According to embodiments, provided is a method of detecting damage, the method including applying at least one of prescribed materials to a surface of an object and measuring an electrical signal of the object.

### ADVANTAGEOUS EFFECTS

Embodiments may provide a method of determining a normal region and a damaged region of an object through an electrical signal.

Embodiments may determine damage occurring in an object.

Embodiments may include, for example, an object including a conductor and an insulating layer surrounding the conductor, and may determine whether the conductor is exposed according to the damage of the insulating layer.

Embodiments may recognize a location where an object is damaged.

Embodiments may determine whether a surface of an object is damaged without damaging the object.

Effects obtainable from the present disclosure are not limited by the above mentioned effects, and other unmentioned effects can be clearly understood from the above description by those having ordinary skill in the technical field to which the present disclosure pertains.

### DESCRIPTION OF DRAWINGS

The present disclosure will become more fully understood from the detailed description given herein below and the accompanying drawings, which are given by illustration only, and thus are not limitative of the present disclosure.
FIG. 1 is a cross-sectional diagram of a pouch;
FIG. 2 is a block diagram of a damage detecting apparatus according to embodiments.
FIG. 3 is a flowchart illustrating a damage detecting method according to embodiments.
FIG. 4 is a diagram schematically illustrating a damage detecting apparatus according to embodiments.
FIG. 5 is a diagram schematically illustrating a circuit of a damage detecting apparatus according to embodiments.
FIG. 6 is a diagram illustrating an electrical signal acquired through a damage detecting apparatus according to embodiments.
FIG. 7 is a diagram illustrating a pouch with damage according to embodiments.
FIG. 8 is a flowchart illustrating a damage detecting method according to embodiments.

### BEST MODE

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present

Furthermore, each drawing is described for convenience of explanation, but it is also within the scope of the present disclosure that those skilled in the art may combine at least one drawing to implement another embodiment.

In addition, it will be understood that when an element such as a layer, region, or substrate is mentioned as existing "on" another component, this may exist directly on another element or an intermediate element may exist in between.

In the present specification, for convenience of description, an apparatus for inspecting whether an insulating layer of a battery including a secondary battery is damaged is described as an example of embodiments. However, an inspection target of the embodiments is not limited thereto. For example, a damage detecting apparatus described herein is applicable to all targets including a conductor and an insulating layer, and is applied to all targets including, for example, a conductor and an insulating layer surrounding the conductor.

An object described in the present specification is a target to which embodiments are applied. The object includes a conductor and an insulating layer. The object includes, for example, all targets including a conductor and an insulating layer surrounding the conductor or all objects including an insulating layer and a conductor surrounding the insulating layer. In addition, the object may further include a conductor and an internal configuration packaged by the insulating layer. The object includes, for example, a secondary battery including a battery and a pouch for packaging the battery. In the present specification, for convenience of description, an object and a pouch or a secondary battery may be used interchangeably. Alternatively, in the present specification, for convenience of description, a pouch may be described as an example of an application target of a damage detecting apparatus according to embodiments.

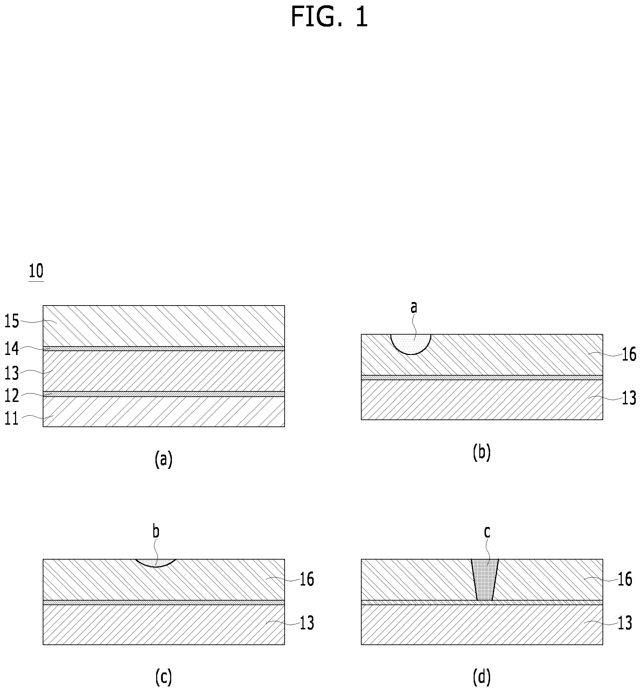

FIG. 1 is a cross-sectional diagram illustrating a pouch;
A pouch 10 is an example of an object that is an application target of embodiments, for example. The determination of whether the pouch 10 is damaged is based on whether a conductor layer is exposed due to a damage occurring in the pouch 10. First, the structure of the pouch 10 will be described with reference to FIG. 1 (a).

FIG. 1(a) illustrates a cross-section of the pouch 10.

For example, the pouch 10 is formed by stacking at least one of an inner layer 11, a conductor layer 13, and an outer layer 15. The pouch 10 may further include a first adhesive layer 12 between the inner layer 11 and the conductor layer 13 to stack the inner layer 11 and the conductor layer 13. In addition, in order to stack the conductor layer 13 and the outer layer 15, the pouch 10 may further include a second adhesive layer 14 between the conductor layer 13 and the outer layer 15.

The inner layer 11 may be disposed close to an electrode assembly 2 or may contact the electrode assembly 2. Accordingly, the inner layer 11 may include, for example, an insulating material to cut off electrical connection with the electrode assembly 2, and for example, a resin such as polypropylene (PP), polyethylene (PE), or the like may be used.

The conductor layer 13 maintains mechanical strength of the pouch 10 and serves as a barrier layer of moisture and oxygen. Accordingly, the conductor layer 13 includes metal, for example, aluminum (Al), etc.

The outer layer 15 is coated on the outside of the conductor layer 13 to electrochemically block the battery 1 from the outside. In addition, the outer layer 15 physically protects the battery 1 from external impact. To this end, the outer layer 15 includes a polymer layer and includes, for example, polyethylene terephthalate (PET), a nylon resin, etc.

In this case, when the outer layer 15 of the pouch 10 is damaged, the conductor layer 13 located below the outer layer 15 may be exposed to the outside. Alternatively, when the inner layer 11 of the pouch 10 is damaged, the conductor layer 13 disposed on the inner layer 15 may be exposed to the electrode assembly 2. In this case, the battery 1 generates safety problems such as ignition or explosion.

For convenience of description, hereinafter, the outer or inner layer of the pouch 10 is referred to as an insulating layer 16.

FIG. 1 (b) is a cross-sectional diagram of the pouch 10 that is not damaged.

As shown in FIG. 1 (b), for example, a foreign substance a such as dust may be stained on the insulating layer 16 of the pouch 10. Since the foreign substance *a* does not inhibit safety of the battery 1, the pouch 10 corresponds to a normal pouch rather than a damaged pouch.

As shown in FIG. 1 (c), for example, a very shallow recess b may be formed in the insulating layer 16 of the pouch 10. The shallow recess b may be regarded as a damage through a vision image. However, in the case of the very shallow recess b, there is no risk of exposing the conductor layer 13 and safety is not inhibited with respect to the battery 1. Therefore, in the case of the very shallow recess b, the pouch 10 corresponds to a normal pouch rather than a damaged pouch.

As shown in FIG. 1 (d), for example, a crack c through which the conductor layer 13 is exposed may be formed in the insulating layer 16 of the pouch 10. In this case, the conductive layer 13 under the insulating layer 16 is exposed through the by crack c. Accordingly, the pouch 10 including the crack c corresponds to a damaged pouch.

Like the examples described above, various types of foreign substances or recesses may be formed on the appearance of the pouch 10. However, all of various forms of foreign substances or scratches do not result in the damaged pouch. There is a need for a method of determining whether a pouch corresponds to a damaged pouch with respect to various types of foreign substances or scratches.

Therefore, hereinafter, a damage inspection device capable of inspecting whether damage to the pouch 10 occurs will be described in detail.

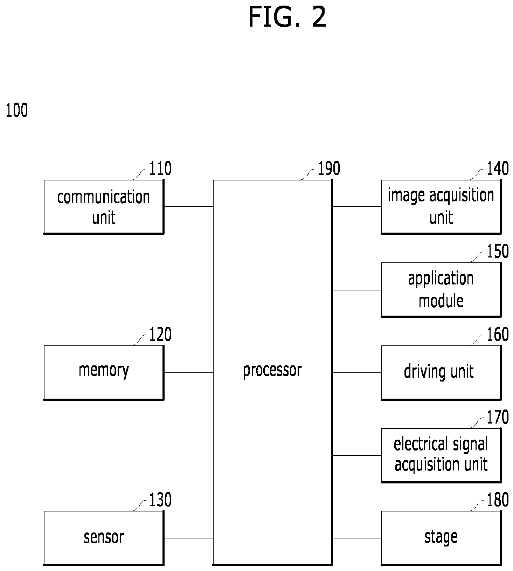

FIG. 2 is a block diagram illustrating a damage detecting apparatus according to embodiments.

A damage detecting apparatus 100 according to embodiments is a device for inspecting whether damage to an object occurs. For example, the damage detecting apparatus 100 provides electrical signals of different sizes with respect to a normal region and a damaged region of an object. Accordingly, the damage detecting apparatus 100 provides a method for distinguishing between a normal region and a damaged region of an object. To this end, the damage detecting apparatus 100 according to embodiments may include an example described below. Hereinafter, for convenience of description, the pouch 10 will be described as an example of an object.

The damage detecting apparatus 100 according to embodiments is a device for inspecting whether damage to the pouch 10 occurs. For example, as shown in FIG. 1 (b) and FIG. 1 (c), the damage detecting apparatus 100 determines a case where it is confirmed that damage has occurred to the pouch 10 with the naked eye, but the pouch 10 is not actually damaged. In addition, for example, the damage detecting apparatus determines a case where damage has occurred to the pouch 10 as shown in FIG. 1 (d).

In this case, as described above, the "damaged pouch" includes a case where the underlying conductor layer 13 of the insulating layer 16 is exposed. A "damage risk pouch" includes a case in which the underlying conductor layer 13 of the insulating layer 16 is not exposed, but the risk of exposure of the underlying conductor layer 13 of the insulating layer 16 over time is high. The "normal pouch" includes a case in which the underlying conductor layer 13 of the insulating layer 16 is not exposed.

The damage detecting apparatus 100 according to embodiments includes a communication unit 110, a memory 120, a sensor 130, an image acquisition unit 140, an application module 150, a driving unit 160, an electrical signal acquisition unit 170, a stage 180, and a processor 190 for controlling all or some of the components included in the damage detecting apparatus 100. The damage detecting apparatus 100 may include all or some of the components shown in FIG. 2. In addition, the damage detecting apparatus 100 may further include other components in addition to the components shown in FIG. 2.

The communication unit 110 transmits and receives data between internal components of the damage detecting apparatus 100. Alternatively, the communication unit 110 transmits and receives data between the damage detecting apparatus 100 and an external server or device. The communication unit 110 transmits and receives data through a long or short range. The communication unit 110 transmits and receives data by wire or wirelessly.

The communication unit 110 may include, for example, a long-range network interface such as a 3G module, an LTE module, an LTE-A module, a Wi-Fi module, a WiGig module, an Ultra-Wide Band (UWB) module, a LAN card, and the like. In addition, the communication unit 110 may include a short-range network interface such as, for example, a Magnetic Secure Transmission (MST) module, a Bluetooth module, a Near Field Communication (NFC) module, a Radio Frequency IDentification (RFID) module, a ZigBee module, a Z-wave module, an infrared module, etc.

The memory 120 stores various commands or information used to drive and control the damage detecting apparatus 100. The memory 120 includes at least one of a volatile storage medium and a non-volatile storage medium. The memory 120 is at least one of a Read Only Memory (ROM) and a Random Access Memory (RAM).

For example, the memory 120 stores data on a transfer speed of the application module 150. Alternatively, for example, the memory 120 stores data on a type of a material applied from the application module 150, an amount of applied material per hour, and an application speed of the application module 150 corresponding to the amount of the material applied per hour.

The sensor 130 senses data about an internal or external environment of the damage detecting apparatus 100.

The sensor 130 may be, for example, at least one of a proximity sensor, an illumination sensor, a touch sensor, an acceleration sensor, a magnetic sensor, a G-sensor, a gyroscope sensor, a motion sensor, an RGB sensor, an infrared (IR) sensor, an ultrasonic sensor, an environmental sensor (e.g., a barometer, a hygrometer, a thermometer, a radioactivity detection sensor, a heat detection sensor, a gas detection sensor, etc.), a chemical sensor (e.g., an electronic nose, a healthcare sensor, a biometric sensor, etc.).

The damage detecting apparatus 100 according to embodiments may combine and utilize information sensed by at least one or more sensors among the sensors.

For example, the sensor 130 senses data for the pouch 10. For example, the sensor 130 senses a distance between the pouch 10 and the application module 150 and includes, for example, a distance sensor.

The image acquisition unit 140 acquires an image. Here, the image may include, for example, a 2D image, a 3D image, a still image, and a moving image. The image also includes all images, such as an optical image and a thermal image. For example, the image acquisition unit 140 acquires a vision image for the pouch 10. For example, the image acquisition unit 140 acquires a vision image of a surface of the pouch 10. The image acquisition unit 140 may include, for example, a camera.

The application module 150 applies a prescribed material to an inspection target. For example, the application module 150 may apply a prescribed fluid to an object, for example, a prescribed material. The application module 150 applies a prescribed material such that electrical signals between a damaged region and a normal region of the object are outputted differently.

For example, the application module 150 applies a prescribed material onto a surface of the pouch 10. The prescribed material is, for example, ionized gas, activated material, etc. Alternatively, the prescribed material is, for example, an AC or DC voltage. The application module 150 is a module for generating and/or applying an ionized gas or an activated material, for example, a plasma, a laser, an X-ray, an ionizer, and the like. For example, if the application module 150 is a plasma, the application module 150 uses an electromagnetic field, heat, or the like. For example, if the application module 150 is an ionizer, the application module 150 uses atmospheric pressure plasma, corona discharge, etc.

The driving unit 160 moves the application module 150. For example, the driving unit 160 moves the application module 150 in a horizontal direction. The driving unit 160 moves the application module 150 to a place requiring a prescribed material to be applied with respect to the pouch 10.

When a prescribed material is applied to an object, the electrical signal acquisition unit 170 acquires an electrical signal of a region to which the prescribed material is applied by the application module 150. For example, when a prescribed fluid is applied to an object, the electrical signal acquisition unit 170 senses an electrical signal of a region to which the prescribed fluid is applied. The electrical signal includes, for example, an AC/DC voltage and current. The electrical signal acquisition unit 170 is electrically connected to, for example, the pouch 10 to acquire an electrical signal generated from the pouch 10.

The stage 180 provides a space in which the battery 1 or the pouch 10 is loaded. The battery 1 or the pouch 10 is loaded on the stage 180 and receives a prescribed material from the application module 150. The stage 180 moves with respect to the application module 150 based on the data measured by the sensor 130. For example, the stage 180 drives in a vertical direction with respect to the application module 150 based on data measured by the sensor 120 or a user command received via the communication unit. The processor 190 controls all or some components included in the damage detecting apparatus 100. For example, the processor 190 determines whether there is damage to the pouch 10 based on the electrical signal data acquired by the electrical signal acquisition unit 170. The processor 190 may include, for example, a Central Processing Unit (CPU) and a Micro Controller Unit (MCU). The processor 190 is embedded in, for example, the damage detecting apparatus 100. Alternatively, the processor 190 may be located outside the damage detecting apparatus 100 and control all or a part of the components included in the damage detecting apparatus 100 through the communication unit 110.

For example, the processor 190 determines whether the battery 10 or the pouch 10 is damaged. For example, the processor 190 determines whether the pouch 10 is damaged through a difference in electrical signals of the pouch 10 generated according to application of a prescribed material. For example, after a prescribed material is applied, the processor 190 acquires an electrical signal for a normal region of the pouch 10. After the prescribed material is applied, the processor 190 determines a region in which an electrical signal different from the electrical signal for the normal region is acquired as a damaged region of the pouch 10. Alternatively, for example, the processor 190 acquires an electrical signal for a damaged region of the pouch 10 after a prescribed material is applied. After a prescribed material is applied, the processor 190 determines a region in which an electrical signal different from the electrical signal for the damaged region is acquired as a normal region of the pouch 10. In this case, the difference in electrical signals does not require the same absolute numerical values. For example, the processor 190 may divide a size of an acquired electrical signal into two or more zones, determine one or more regions as normal regions, and determine the other one or more regions as damaged regions.

Hereinafter, the damage detecting apparatus 100 including all or some of these components will be described in more detail.

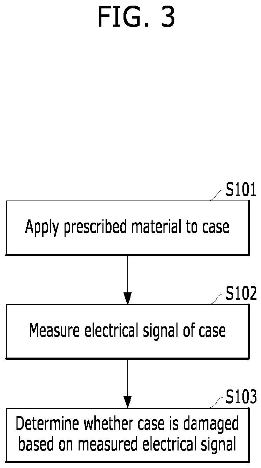

FIG. 3 is a flowchart illustrating a damage detecting method according to embodiments.

FIG. 3 illustrates a method of detecting damage through the components described in FIG. 2 by the damage detecting apparatus 100 according to embodiments. Meanwhile, in FIG. 3 and below, the pouch 10 will be described as an example of an object that is an inspection target of the damage detection apparatus 100. Yet, the object may be the battery 1 itself, not the pouch 10 of the battery. Even in this case, the damage detecting apparatus 100 may determine whether the pouch 10 included in the battery 1 is damaged.

As shown in FIG. 3, the damage detecting apparatus 100 applies a prescribed material to the pouch 10 (S101).

When the pouch 10 is loaded on the stage 180, the application module 150 applies a prescribed material toward the pouch 10. The prescribed material is, for example, a prescribed fluid. The application module 150 includes, for example, a nozzle configuration. The application module 150 sprays a prescribed material toward the pouch 10. As described above, the prescribed material includes, for example, an ionized gas, an activated material, etc. In this case, an electrical state of the pouch 10 changes due to the applied prescribed material.

For example, when a region to which a prescribed material is applied is the conductor layer 13, the conductor layer 13 may be electrically excited by the prescribed material. Alternatively, for example, when a region to which a prescribed material is applied is the insulating layer 16, the insulating layer 16 does not generate or almost does not generate electrical excitation even if the insulating layer 16 is made of the prescribed material.

As shown in FIG. 3, the damage detecting apparatus 100 measures an electrical signal of the pouch 10.

When a prescribed material is applied to the pouch 10, the electrical signal acquisition unit 170 measures an electrical signal (electrical state) of the pouch 10. The electrical signal includes, for example, voltage, current, impedance/resistance, and the like. The electrical signal acquisition unit 170 acquires a changed electrical signal of the pouch 10 due to the applied prescribed material. The changed electrical signal includes the degree of the electrical excitation described in the step S101.

A user may determine whether the pouch 10 is damaged through the electrical signal measured by the electrical signal acquisition unit 170. For example, the user may identify whether the pouch 10 is damaged by detecting a change in the electrical signal of the pouch 10.

For example, the user may determine a region in which an electrical signal outputted according to a preset circuit is relatively large as a damaged region of the pouch 10, and determine a region in which the outputted electrical signal is relatively small as a normal region of the pouch 10. Alternatively, the user may determine a region in which an electrical signal outputted according to a preset circuit is relatively small as a damaged region of the pouch 10, and determine a region in which the outputted electrical signal is relatively large as a normal region of the pouch 10. In this case, the predetermined circuit may be variously designed according to user convenience, and the reference for the determination of the normal region and the damaged region is not limited according to the above-described method. This will be described in more detail through a filter circuit.

Alternatively, as described below, the damage detecting apparatus 100 according to embodiments may determine whether the pouch 10 is damaged.

As shown in FIG. 3, the damage detecting apparatus 100 determines whether the pouch 10 is damaged based on the measured electrical signal (S103).

The processor 190 determines whether the object is damaged through the electrical signal changed according to the applied prescribed material. For example, the processor 190 determines whether the object is in an insulated state or a conductive state based on the degree of the electrical signal changed by the applied prescribed material. For example, when the object includes the damaged region, the processor 190 divides the electrical signal acquired by the applied prescribed material into two or more sections, determines one section as the damaged region, and determines the other section as the normal region.

For example, the object is the pouch 10. For example, the pouch 10 includes a conductor and an insulating layer surrounding the conductor. In this case, the processor 190 determines a region in an insulated state, which is a region corresponding to the insulating layer, as a normal region. Alternatively, the processor 190 determines a region in a conductive state, which is a conductor exposed region, as a damaged region. Alternatively, for example, the object may include an insulating layer and a conductor surrounding the insulating layer. In this case, the processor 190 determines a region in a conductive state, which is a region corresponding to the conductor, region as a normal region. Alternatively, the processor 190 determines a region in an insulated state, which is an insulating layer exposed region, as a damaged region. As described above, the processor 190 determines whether the object is damaged through the changed electrical signal with respect to two or more layers, which have different electrical characteristics, of the object. Meanwhile, the damaged region indicates a region in which at least one layer of the two or more layers is damaged to expose another layer. In addition, the normal region represents a region in which all the two or more layers are not damaged.

Through the above-described features, the damage detecting apparatus 100 according to embodiments senses whether the pouch 10 is damaged without applying a high voltage to the battery 1 or the pouch 10. In addition, the damage detecting apparatus 100 according to embodiments checks whether there is a damage through an electrical signal, and thus accuracy is improved as compared to a case in which the damage detecting apparatus 100 determines whether there is a damage with the naked eye.

Hereinafter, the respective components will be described in more detail according to the driving order for these embodiments.

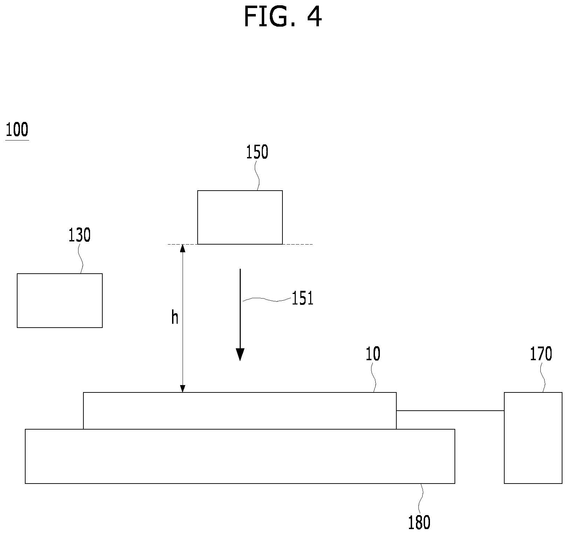

FIG. 4 schematically illustrates a damage detecting apparatus according to embodiments.

As described with reference to FIG. 2 to FIG. 3, the damage detecting apparatus 100 according to embodiments includes the sensor 130, the application module 150, the driving unit 160, the electrical signal acquisition unit 170, the stage 180, and the processor 180.

The stage 180 provides a space in which the pouch 10 is loaded. When the pouch 10 is loaded on the stage 180, the application module 150 applies a prescribed material 151 toward the pouch 10. The prescribed material 151 is a material that is ionized or activated. The electrical signal acquisition unit 170 is connected to the pouch 10 to acquire an electrical signal that is changed by the prescribed material 151 from the pouch 10. Through this, the damage detecting apparatus 100 determines whether the pouch 10 is damaged.

In this case, the changed electrical signal also varies depending on a distance between the application module 150 and the pouch 10. When the distance between the application module 150 and the pouch 10 is changed, the electrical signal may be outputted differently even when there is no damage to the pouch 10. In general, however, the pouch 10 is not a complete plane. Accordingly, even if an electrical signal is measured by fixing the application module 150 and the pouch 10 to predetermined positions, reliability of a result value may be lowered. Therefore, in order to increase the reliability of the electrical signal, the distance between the application module 150 and the pouch 10 needs to be kept constant.

When the pouch 10 is loaded on the stage 180, the sensor 130 senses a distance h between the pouch 10 and the application module 150. The sensor 130 is, for example, a displacement sensor or a proximity sensor.

The processor 190 controls the stage 180 based on the distance sensed by the sensor 130. The processor 190 allows the stage 180 to move with respect to the application module 150 based on the distance sensed by the sensor 130. For example, the processor 190 allows the stage 180 to move in a vertical direction relative to the application module 150. The stage 180 maintains a constant distance between the pouch 10 and the application module 150 through height adjustment. Alternatively, the processor 190 may allow the application module 150 to move with respect to the stage 180 based on the distance sensed by the sensor 130. Alternatively, the processor 190 may allow the application module 150 or the stage 180 to simultaneously move based on the distance sensed by the sensor 130. Alternatively, a user may adjust the driving of the stage 180 or the application module 130 based on the distance sensed by the sensor 130. Through this, the damage detecting apparatus 100 according to embodiments may determine whether the pouch 10 is damaged or not with high reliability.

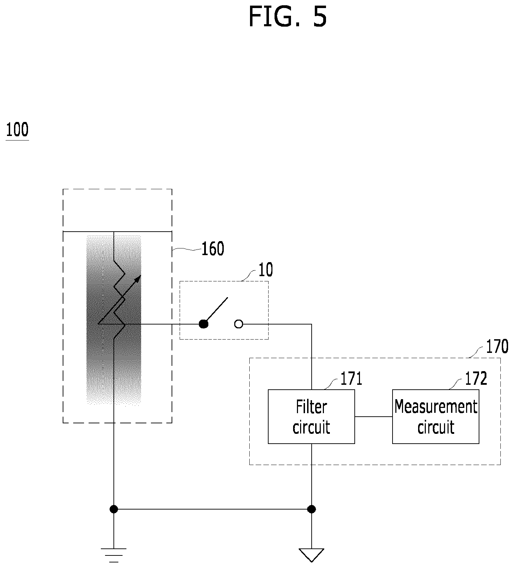

FIG. 5 schematically illustrates a circuit diagram of a damage detecting apparatus according to embodiments.

As described with reference to FIGs. 2 to 4, the damage detecting apparatus 100 according to the embodiments includes the application module 150 and the electrical signal acquisition unit 170. Accordingly, the damage detecting apparatus 100 will be described in the form of a circuit diagram.

The application module 150 applies the prescribed material 151 toward the pouch 10. The prescribed material 151 includes electrical properties. The prescribed material 151 is, for example, an ionized material or an activated material. The prescribed material 151 serves as a variable resistor depending on a distance between the application module 150 and the pouch 10. Through the prescribed material 151, an electrical state of a surface of the pouch 10 changes.

For example, the pouch 10 includes a conductor region and an insulator region. In this case, the conductor region and the insulator region have different electrical excitations according to the applied prescribed material 151. For example, when the prescribed material 151 is applied, the conductor region may be electrically excited more. Alternatively, for example, when the prescribed material 151 is applied, the insulator region may be electrically excited less. For example, if the pouch 10 includes a conductor and an insulator surrounding the conductor, the conductor is exposed if there is damage to the insulator. In this case, a region in which the conductor is exposed due to the damage to the insulator and a region in which the conductor owing to no damage to the insulator may have different electrical excitations due to the prescribed material 151.

The electrical signal acquisition unit 170 acquires an electrical signal of the pouch 10. The electrical signal acquisition unit 170 acquires an electrical signal of the pouch 10 having the changed electrical state. For example, the electrical signal acquisition unit 170 acquires an electrical signal that varies between a damaged region and a normal region as the electrical excitation is changed by the prescribed material. Meanwhile, the electrical signal acquisition unit 170 includes a filter circuit 171 and a measurement circuit 172 to more clearly acquire an electrical signal according to the changed electrical state.

The filter circuit 171 filters an electrical signal of the pouch 10. For example, the filter circuit 171 selectively measures a specific electrical signal. Alternatively, the filter circuit 171 removes noise for the electrical signal. Alternatively, the filter circuit 171 amplifies or attenuates the specific electrical signal. The filter circuit 171 uses, for example, a frequency filtering technique.

For example, the filter circuit 171 amplifies or attenuates an electrical signal of a predetermined magnitude or more among the electrical signals of the pouch 10. Alternatively, the filter circuit 171 amplifies or attenuates an electrical signal less than a predetermined size among the electrical signals of the pouch 10. This allows the filter circuit 171 to more clearly distinguish the electrical signal when the conductor layer 13 is exposed and the electrical signal when the conductor layer 13 is not exposed.

For example, the filter circuit 171 filters the electrical signal such that an electrical signal greater than or equal to a preset value is outputted as a first prescribed value, and filters the electrical signal such that an electrical signal less than the preset value is outputted as a second prescribed value. For example, the filter circuit 171 filters the electrical signal such that an electrical signal greater than or equal to a preset value is outputted as 1. Alternatively, the filter circuit 171 filters the electrical signal such that an electrical signal less than the preset value is outputted as 0. In this case, the preset value is a value that is appropriately adjusted and preset or stored by a user. In addition, the first prescribed value and/or the second prescribed value may be appropriately adjusted and preset or stored by the user. This is an example, and an example in which the filter circuit 171 filters an electrical signal is not limited thereto. That is, the filter circuit 171 may be configured according to user convenience so that an electrical signal difference between the damaged region and the normal region is more clearly distinguished.

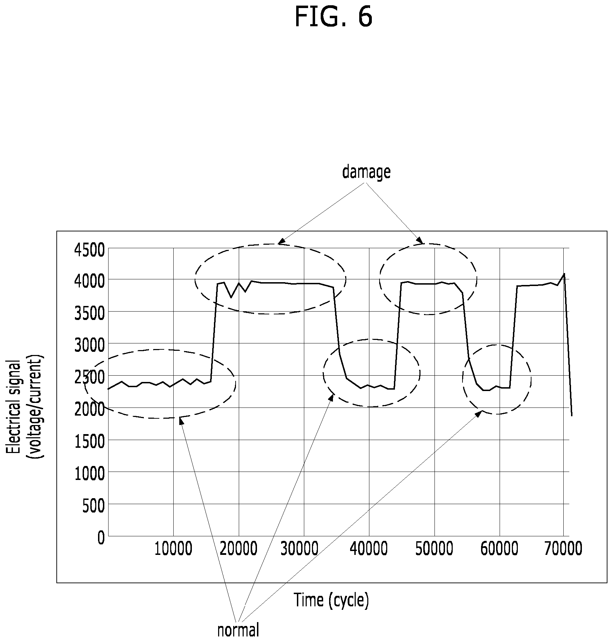

The measurement circuit 172 measures the filtered electrical signal. The electrical signal acquisition unit 170 transmits data including the electrical signal measured by the measurement circuit 172 to the processor 190 through the communication unit 110. The processor 190 determines whether the pouch 10 is damaged based on the received data. This will be described in more detail with reference to FIG. 6.

FIG. 6 is a graph of an electrical signal obtained through a damage detecting apparatus according to embodiments.

As described with reference to FIG. 2 to 5, the damage detecting apparatus 100 according to embodiments acquires an electrical signal through the electrical signal acquisition unit 170. FIG. 6 is a graph illustrating data generated for the processor 190 to determine a presence or non-presence of damage based on the received data.

In a graph shown in FIG. 6, a horizontal axis represents a time and a vertical axis represents an electrical signal. In this case, the horizontal axis is a time or a moving cycle of the application module 150. The electrical signal of the vertical axis is, for example, a voltage or current as an electrical signal. The graph of FIG. 6 illustrates an electrical signal aspect during the time for which the application module 150 applies the prescribed material 151.

In addition, the graph shown in FIG. 6 illustrates an example in which the filter circuit 171 amplifies a signal of a damaged region. However, an example of a signal filtered by the filter circuit 171 is not limited to the case of FIG. 6. The processor 190 determines whether the insulating layer is damaged through an electrical signal.

For example, as shown in FIG. 6, when the filter circuit 171 amplifies the electrical signal of the damaged region, the processor 190 determines whether the electrical signal is greater than or equal to a preset value. When the electrical signal is greater than or equal to a preset value, the processor 190 determines that the pouch 10 has been damaged. For example, the processor 190 determines that an electrical signal (normal), which is smaller than the preset value, is a portion of the conductor layer 13 that is not exposed. For example, the processor 190 determines that an electrical signal (damage), which is equal to or greater than the preset value, is a portion of the conductor layer 13 that is exposed.

The processor 190 may determine a portion where damage occurs in the pouch 10 by using a time when the application module 150 applies the prescribed material 151. The processor 190 acquires a pre-stored moving speed of the application module 150 from the memory 120. Alternatively, the processor 190 may acquire a moving speed of the application module 150 through the driving unit 160. The processor 190 calculates a coordinate point on the pouch 10 through the moving speed and time of the application module 150. For example, the processor 190 calculates a coordinate point of a portion of the pouch 10, which is determined that the conductor layer 13 is exposed, through the speed and time.

When determining that the conductor layer 13 is exposed, the processor 190 determines a damaged pouch with respect to the pouch 10. Alternatively, when determining that the conductor layer 13 is exposed, the processor 190 calculates a coordinate point of the exposed portion and determines the location of a damaged region of the insulating layer 16 based on the calculated coordinate point.

Accordingly, the damage detecting apparatus 100 according to embodiments accurately determines whether one pouch 10 is damaged. Alternatively, the damage detecting apparatus 100 according to embodiments accurately determines whether a damaged pouch is present among a plurality of pouches. If the damaged pouch is present, the damage detecting apparatus 100 accurately determines which pouch is the damaged pouch.

How to determine whether the pouch 10 is damaged through the damage detecting apparatus 100 including the application module 150 and the electrical signal acquisition unit 170 has been described with reference to FIGs. 2 to 6. Hereinafter, described is how to determine whether the pouch 10 is damaged by using other components together with the application module 150 and the electrical signal acquisition unit 170.

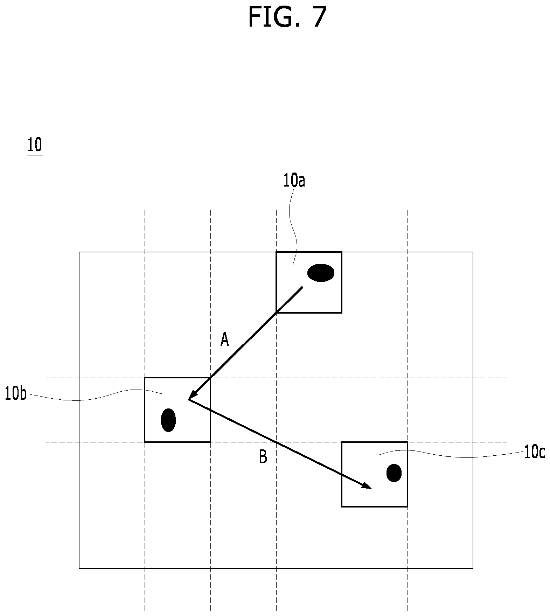

FIG. 7 illustrates a pouch with damage according to embodiments.

As described with reference to FIG. 2, the damage detecting apparatus 100 according to embodiments includes the image acquisition unit 140, the application module 150, the electrical signal acquisition unit 170, and the processor 190. The damage detecting apparatus 100 acquires data through the image acquisition unit 140 with respect to the entire region of the pouch 10. Thereafter, in the data acquired through the image acquisition unit 140, the damage detecting apparatus 100 acquires data through the application module 150 and the electrical signal acquisition unit 170 with respect to a region where damage to the pouch 10 is suspected. This will be described in detail below.

The image acquisition unit 140 acquires an image of the pouch 10. The image acquisition unit 140 acquires, for example, a vision image of the pouch 10. The image acquisition unit 140 has a wide angle of view. The image acquisition unit 140 acquires an image of a wide region of the pouch 10 through, for example, one image. Accordingly, the image acquisition unit 140 acquires data about the pouch 10 in a short time.

The processor 190 determines a suspicious region of damage to the pouch 10 based on the image acquired through the image acquisition unit 140. The processor 190 determines whether there is a scratch or foreign substance (e.g., the scratch or foreign substance described in (b) to (d) of FIG. 1) from the acquired image. When it is determined that there is a scratch or foreign substance in the acquired image, the processor 190 calculates a position of the corresponding scratch or foreign substance. For example, in FIG. 7, the processor 190 determines that there is a scratch or foreign substance in some regions 10a, 10b, and 10cof the entire region of the pouch 10.

The processor 190 allows a prescribed material 151 to be applied to some regions 10a, 10b, and 10cof the entire region of the pouch 10 through the application module 150. The application module 150 applies the prescribed material 151 only to the partial regions 10a, 10b, and 10c of the pouch 10 rather than the entire region of the pouch 10.

The application module 150, for example, applies a prescribed material to the partial region 10a of the pouch 10. The driving unit 160 moves, for example, the application module 150 onto another partial region 10b of the pouch 10 [A]. The application module 150 applies, for example, a prescribed material to another portion 10b of the pouch 10. The driving unit 160 may move the application module 150 onto another partial region 10c of the pouch 10 [B]. The application module 150 applies, for example, a prescribed material to another partial region 10cof the pouch 10. That is, the application module 150 moves along only the path A and the path B to complete the application of the prescribed material 151 within a short time.

However, unlike the above description, the processor 190 may control the application module 150 and/or the stage 180 to move based on a vision image. For example, the processor 190 may move the stage 180 so that the application module 150 may face another partial region 10b from the partial region 10a.

In addition, the electrical signal acquisition unit 170 is connected to the pouch 10, and acquires an electrical signal for the region to which the prescribed material 151 is applied by the application module 150. The processor 190 determines whether the partial regions 10a, 10b, and 10cof the pouch 10 correspond to the damaged regions, based on the acquired electrical signal.

Through the above-described method, the damage detecting apparatus 100 according to the embodiments quickly determines a suspicious damaged region with respect to a wide region. In addition, the damage detecting apparatus 100 accurately determines whether the suspicious damaged region, which is a narrow region, is damaged. In addition, as a prescribed material is applied to a partial region, the damage detecting apparatus 100 may improve a damage detection speed with respect to the partial region.

Although a vision image is acquired through the image acquisition unit 140 in FIG. 7, embodiments are not limited thereto. For example, the damage detecting apparatus 100 according to embodiments may be applied to a method of measuring a thickness of the pouch 10 by a thickness measurement unit (not shown) and then applying a prescribed material to a partial region of the pouch 10. That is, the damage detecting apparatus 100 according to embodiments is applicable to any method capable of quickly acquiring data with respect to a wide region.

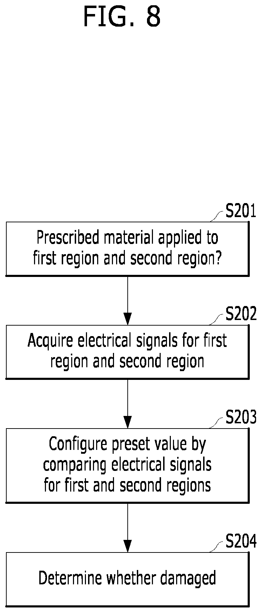

FIG. 8 is a flowchart illustrating a damage detecting method according to embodiments.

For example, when a prescribed material is applied only to a partial region as shown in FIG. 7, a reference value for damage determination may not be provided with respect to an electrical signal acquired according to the prescribed material application. For example, in the entire region of the pouch 10, some regions to which the prescribed material is applied may all be damaged regions. However, in this case, since all measurement values of the electrical signals are outputted similarly, a reference for the damage determination is not provided. Therefore, for example, a method of configuring a preset value for a case of applying a prescribed material to a partial region, as shown in FIG. 7, will be described.

As shown in FIG. 8, the damage detecting apparatus 100 according to embodiments may apply a prescribed material to a first region and a second region (S201).

The application module 150 applies a prescribed material to the first region and the second region of the pouch 10. In this case, the first region is a suspicious damaged region. For example, the first region is the partial region described with reference to FIG. 7. In addition, the second region is the region in which damage is not suspected. For example, the second region is a region that is not determined to have a scratch or foreign substance in the pouch 10 of FIG. 7.

As shown in FIG. 8, the damage detecting apparatus 100 according to embodiments acquires an electrical signal for each of the first region and the second region (S202).

The electrical signal acquisition unit 170 is connected to the pouch 10 and acquires an electrical signal. The electrical signal acquisition unit 170 acquires first and second electrical signals for the first and second regions having the electrical signals changed, respectively, based on applying the prescribed material 151 by the application module 150.

As shown in FIG. 8, the damage detecting apparatus 100 according to embodiments configures a preset value by comparing the electrical signals for the first region and the second region (S203).

The processor 190 acquires an average distribution region of the first electrical signal from the first electrical signal for the first region. The processor 190 acquires an average distribution region of the second electrical signal from the second electrical signal for the second region. The processor 190 configures the average distribution region of the second electrical signal with the preset value. That is, in this case, the preset value includes a specific region other than one specific value.

As shown in FIG. 8, the damage detecting apparatus 100 according to embodiments determines whether the pouch 10 is damaged (S204).

The processor 190 determines whether the average distribution region of the first electrical signal fully or partially overlaps the average distribution region of the second electrical signal. When the average distribution region of the first electrical signal fully or partially overlaps the average distribution region of the second electrical signal, the processor 190 determines the first region as a normal region. Alternatively, when the average distribution region of the first electrical signal fails to fully overlap the average distribution region of the second electrical signal, the processor 190 may determine the first region as a damaged region. In this case, the processor 190 determines the pouch 10 as a damaged pouch.

Through such a method, the damage detecting apparatus 100 according to the embodiments may quickly and accurately determine whether one pouch 10 is damaged. Alternatively, according to the embodiments, it may be able to quickly and accurately determine whether there is a damaged pouch from among a plurality of the pouches 10 and which one of a plurality of the pouches 10 corresponds to the damaged pouch.

Meanwhile, the description with reference to FIG. 8 is applicable to the embodiments of FIGS. 2 to 6.

Although the damage detecting apparatus and the damage detecting method according to the embodiments of the present disclosure have been described as specific embodiments, which is merely an example, and thus the present disclosure is not limited thereto, and should be interpreted as having the widest scope according to the basic idea disclosed in the present specification.

A person skilled in the art may combine and replace the disclosed embodiments to implement an unspecified embodiment, but this also does not deviate from the scope of rights the present disclosure. In addition, those skilled in the art may easily y change or modify the disclosed embodiments based on the present specification, and it is clear that such changes or modifications also fall within the scope of rights of the present disclosure.

### INDUSTRIAL APPLICABILITY

An apparatus for detecting damage and method thereof according to embodiments are industrially applicable.

## Claims

1. An apparatus for detecting damage, comprising:
an application module applying a prescribed material to an object; and
an electrical signal acquisition unit acquiring an electrical signal of the object based on applying the prescribed material to the object.

2. The apparatus of claim 1, the electrical signal acquisition unit comprising:
a filter circuit filtering the electrical signal of the object; and
a measurement circuit measuring the filtered electrical signal.

3. The apparatus of claim 1, comprising a processor configured to determine whether the object is damaged based on the acquired electrical signal.

4. The apparatus of claim 3, wherein the processor is configured to acquire an electrical signal for a normal region of the object and determine a region in which an electrical signal different from the electrical signal for the normal region is acquired as a damaged region of the object.

5. The apparatus of claim 1, wherein the prescribed material comprises an ionized gas or an activated material.

6. The apparatus of claim 1, comprising:
a distance measurement sensor measuring a distance between the application module and the object; and
a stage providing a space for having the object loaded therein.

7. The apparatus of claim 6, wherein the stage moves with respect to the application module to maintain a constant distance between the application module and the object based on the measured distance.

8. The apparatus of claim 1, the object comprising:
a conductor; and
an insulator surrounding at least a portion of the conductor.

9. A method of detecting damage, comprising:
applying at least one of prescribed materials to a surface of an object; and
measuring an electrical signal of the object.
